# EUROPEAN PATENT SPECIFICATION

(11) **EP 1 348 580 B1**
(45) Date of publication and mention of the grant of the patent: **09.08.2006**
(21) Application number: 03006669.0
(22) Date of filing: 25.03.2003
(51) Int. Cl.: B60G 3/20, B60G 11/28, B60G 11/64, B62D 17/00

(54) **Independent suspension for a wheel of a commercial vehicle**
Einzelaufhängung für ein Rad eines Nutzfahrzeugs
Suspension indépendante pour une roue d'un véhicule utilitaire

(30) Priority: 26.03.2002 IT TO20020268
(43) Date of publication of application: 01.10.2003
(73) Proprietor: IVECO S.p.A., 10156 Torino (IT)
(72) Inventor: Rieck, Gerhard, 81247 München (DE); Ponsetti, Ferdinando, 10014 Caluso (IT); Barchi, Ferruccio, 10154 Torino (IT)
(74) Representative: Gervasi, Gemma

(56) References cited:
- EP-A- 0 352 541
- EP-A- 0 365 516
- WO-A-99/30956
- DE-A- 19 619 189
- DE-U- 8 411 982
- FR-A- 2 156 290
- FR-A- 2 674 187
- US-A- 4 313 619
- US-A- 5 401 049
- STENGELIN A: "DER NEUE REISEBUS O 404 VON MERCEDES-BENZ" ATZ AUTOMOBILTECHNISCHE ZEITSCHRIFT, FRANCKH'SCHE VERLAGSHANDLUNG. STUTTGART, DE, vol. 94, no. 1, 1992, pages 4-6,8,11-, XP000241628 ISSN: 0001-2785
- PATENT ABSTRACTS OF JAPAN vol. 1999, no. 10, 31 August 1999 (1999-08-31) & JP 11 123917 A (HINO MOTORS LTD), 11 May 1999 (1999-05-11)
- PATENT ABSTRACTS OF JAPAN vol. 014, no. 006 (M-916), 9 January 1990 (1990-01-09) & JP 01 254413 A (MAZDA MOTOR CORP), 11 October 1989 (1989-10-11)
- PATENT ABSTRACTS OF JAPAN vol. 1999, no. 10, 31 August 1999 (1999-08-31) & JP 11 139127 A (NISSAN DIESEL MOTOR CO LTD), 25 May 1999 (1999-05-25)

## Description

The present invention relates to an independent suspension for a wheel of a commercial vehicle.

It is known that the use of independent suspensions, which were initially restricted to top-of-the-range motor cars, is also becoming ever-more widespread in other classes of motor vehicles as the need for greater driving comfort becomes more influential and widespread. This is also occurring, in particular, in commercial vehicles in which the long periods spent on board the vehicle mean that driving comfort becomes a criterion of primary importance in the choice of vehicle being purchased.

The known types of independent suspension generally have an articulated quadrilateral structure: the stub axle of the wheel is carried by an upright which is connected to the vehicle chassis, in an articulated manner, by means of an upper control arm and a lower control arm. These arms are generally of triangular shape so as to accommodate also the longitudinal loads on the wheel, and they extend outwardly from the vehicle chassis, to which they are articulated directly or via support brackets.

An air spring is frequently used in the known suspensions of the above-mentioned type, the purpose of which is to counteract elastically the rebounds of the suspension. The air spring is generally disposed outside the chassis between the upper control arm and a bracket attached to said chassis.

This type of architecture exhibits a number of drawbacks.

Firstly, the arrangement of the spring externally of the chassis necessarily gives rise to torques on said chassis; moreover, the spring is subject to greater loads than those acting on the wheel because of the relationship between the arms applying said loads with respect to the axis of rotation of the control arm. Therefore, the torques acting on the chassis can be very substantial.

FR 2156290 discloses a suspension wherein an air spring is connected to the upper extremity of a wheel-bearing upright. A bracket, external to the chassis connects the spring to the chassis, which is again subject to elevated torques. The whole suspension, moreover, is bulky as it extends by far above the wheel.

DE 19619189 and EP 0 365 516 also suggest to place the air spring above the wheel-bearing element.

The object of the present invention is to devise a suspension for a wheel of a vehicle, which does not have the drawbacks associated with the aforementioned known suspensions.

Said object is achieved by the present invention in that it relates to a multilink suspension for a wheel of a commercial vehicle, provided with a chassis comprising a pair of side members, said suspension comprising an upright adapted to support in an articulated manner a stub axle of said wheel, an upper control arm and a lower control arm, which arms connect in articulated manner said upright to said chassis, and an air spring interposed between said chassis and said upright, characterised in that said air spring is disposed substantially beneath said side member of said chassis and bears on a support member integral with said upright.

With a view to a better understanding of the present invention a preferred embodiment thereof will be described non-restrictively by way of example below and with reference to the accompanying drawings, in which:
Figure 1 is a view in rear elevation of a suspension in accordance with the present invention;

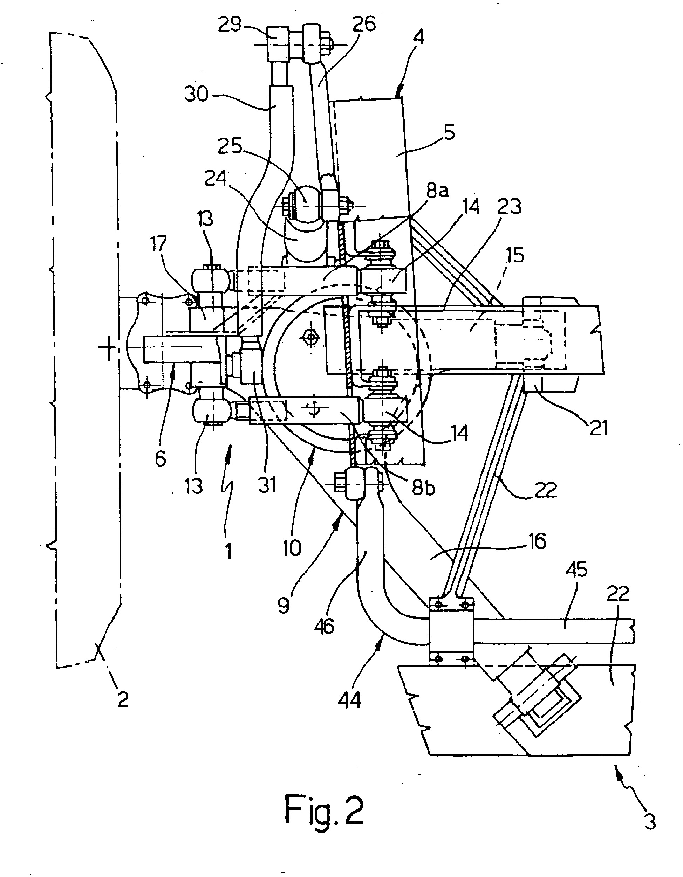

Figure 2 is a plan view from above of the suspension in Figure 1, and

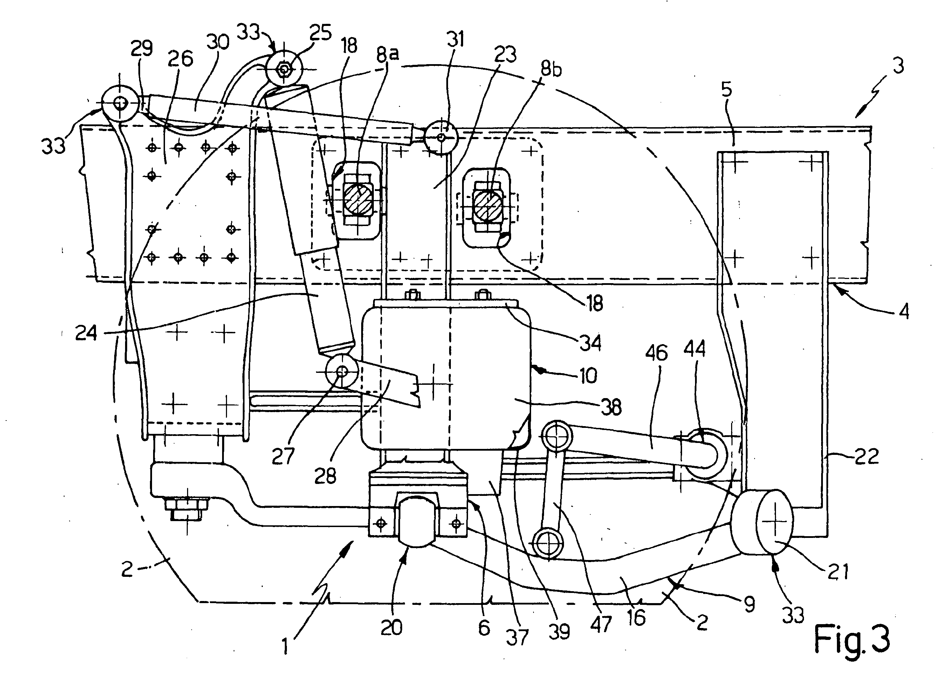

Figure 3 is a section along the line III-III in Figure 1.

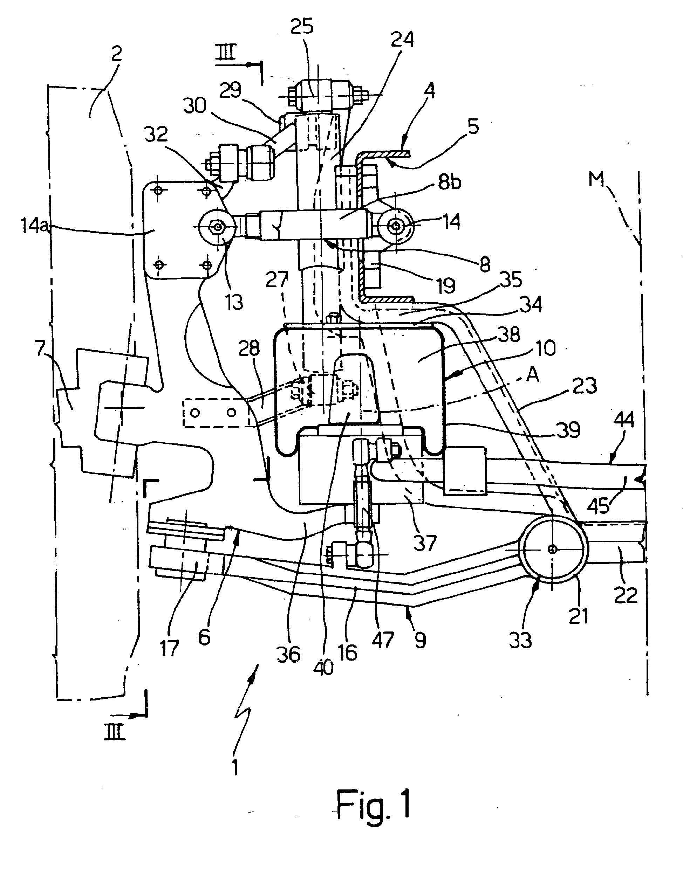

Referring now to Figure 1, the reference numeral 1 generally denotes an independent multilink suspension for a front wheel 2 of a commercial vehicle 3 (partly shown).

The vehicle 3 is provided with a chassis 4 which, in turn, comprises in conventional manner two C-shaped side members 5 (only one of which is shown in the drawings) disposed symmetrically on opposite sides of a median longitudinal plane M of the vehicle 3.

The suspension 1 essentially comprises an upright 6 adapted to support in articulated manner a stub axle 7 of the wheel 2, an upper control arm 8 and a lower control arm 9, which connect in articulated manner the upright 6 to the chassis 4, and an air spring 10 interposed between the chassis 4 and the upright 6.

More particularly, the upper control arm 8 is formed by a pair of mutually parallel rods 8a,8b extending transversely to the vehicle and having respective inner ends 14 (i.e. turned towards the plane M) pivotably mounted on the chassis 4, and respective outer ends 13 (i.e. turned towards the exterior of the vehicle 3) pivotably mounted on respective brackets 14a secured to the sides of an upper end of the upright 6.

More precisely, the rods 8a,8b are mounted to pass through respective openings 18 in the side member 5 of the chassis 4 and they are articulated to a plate 19 secured to the inside of the web of said side member. In this way the rods are connected to the side member 5 substantially in alignment with the centre line thereof, with a view to reducing the torsional stress to a minimum. Advantageously, the rods 8a,8b can be adjusted in length, for example they are made in two parts joined together by screw threads, so as to enable the camber angle of the wheel to be adjusted; for example, it could be beneficial to vary the camber angle as a function of the type of use (load, route) with a view to reducing tyre wear.

The lower control arm 9 is of triangular construction and is formed by two legs 15,16, respectively transverse and inclined, which diverge towards the chassis 4 on which they are pivotably mounted, and they are mutually convergent towards the upright 6 at one outer end 17 of said arm 9, which end is connected to a lower end of the upright 6 by means of a ball joint 20.

More particularly, the legs 15,16 are pivotably mounted on respective supports 21 rigidly connected to cross members 22,23 secured between the side members 5 and substantially U-shaped so as to pass below the obstacle of the drive unit of the vehicle (not shown).

The suspension 1 further comprises a shock absorber 24 having an upper mounting point 25 connected in an articulated manner to a bracket 26 rigidly connected to the side member 5 in a front zone of the suspension 1, and a lower mounting point 27 articulated to a bracket 28 rigidly secured at an intermediate zone of the upright 6.

Finally, the suspension 1 comprises a longitudinal rod 30 having a front end 29 articulated to the bracket 26 and a rear end 31 pivotably mounted at an upper end 32 of the upright 6, adapted to react to the torques caused by longitudinal loads.

All the pivotal connections are effected, in known manner, by means of cylindrical elastic joints 33 of known type, in which the relative rotation between the inner and outer elements takes place by means of torsional deformation of one or more sleeves of elastomeric material (not shown) interposed between the elements of the joint.

According to the present invention, the air spring 10, with an axis A, is disposed substantially below the side member 5. In the example illustrated, the axis A of the air spring 10 is disposed substantially coplanar to the shear centre of the side member 5; in this way the loading of the spring 10 does not produce torsional stress in the side member 5.

In the embodiment illustrated, the spring 10 is secured by an upper mounting plate 34 thereof below a portion 35 of the cross member 23 arranged below the side member 5. Alternatively, the plate 34 could abut directly below the side member 5.

According to another important feature of the present invention, the spring 10 co-operates in its lower region directly with the upright 6. As is clearly evident from Figure 1, the upright 6 has an extension 36 turned towards the median plane M of the vehicle, which serves as a lower support for the air spring 10. In this way the loads are transmitted directly from the wheel 2 to the air spring 10 with a unitary transmission ratio in the running attitude configuration.

In known manner, the air spring 10 comprises a rigid cylindrical lower portion 37 secured to the extension 36, and an upper chamber 38 of variable volume, the side wall 39 of which, consisting of elastomeric material, is adapted to bend around the lower portion 37 when the capacity is reduced as a result of jolts and/or attitude control.

Advantageously, the spring 10 further comprises an internal buffer 40 of elastomeric material secured to the rigid lower portion 37 and serving to provide additional rigidity in the final portion of the compression stroke and an end stop for the spring 10.

The suspension 1 further comprises, optionally, a stabiliser bar 44 of conventional type, which is C shaped with a central portion 45 pivotably mounted on the chassis 4 and a pair of end arms 46 bent at 90° towards the front and connected to the respective lower control arms 9 of the suspension units 1 (only one of which is shown) of the front wheels 2 by means of respective links 47.

The mode of operation of the suspension 1 is the following.

The upright 6 is guided in its vertical amplitude by the upper and lower control arms 8 and 9, as well as by the longitudinal rod 30.

The control arms 8 and 9 accommodate the transverse loads originating from the torques resulting from misaligned vertical loads and from the torques resulting from the longitudinal loads on the wheel.

The lower control arm 9, which is of triangular construction, and the longitudinal rod 30 accommodate the longitudinal loads originating from impacts or braking. The spacial arrangement of the rod 30 also makes it possible to reduce the deflection of the suspension during braking.

The direction transmission of the load from the upright 6 to the spring 10 brings about a unitary transmission ratio of the loads on the wheel 2 to said spring 10; the arrangement of the spring 10 below the side member 5 substantially reduces the torques transmitted to the latter as a result of the loads on the spring 10.

The stabiliser bar 44, if provided, makes it possible to reduce roll in the vehicle by limiting the difference in travel between the right-hand suspension and left-hand suspension.

Finally, it is evident that the suspension 1 described can be subject to modifications and variants which do not depart from the scope of protection defined by the claims.

In particular, the stabiliser bar 44 may be omitted; the upper control arm 8 may be of triangular type and, in that case, the longitudinal bar 30 may be omitted. The buffer 40 may serve only as an end stop under compression.

## Claims

1. A multilink suspension for a wheel (2) of a commercial motor vehicle, provided with a chassis (4) comprising a pair of longitudinal side members (5), said suspension (1) comprising an upright (6) adapted to support in an articulated manner a stub axle of said wheel (2), an upper control arm (8) and a lower control arm (9), which arms connect in articulated manner said upright (6) to said chassis (4), and an air spring (10) interposed between said chassis (4) and said upright (6), **characterised in that** said air spring (10) is disposed substantially beneath said longitudinal side member (5) of said chassis (4) and bears on a support member (36) integral with said upright (6).

2. A suspension (1) according to claim 1, **characterised in that** said support element is an extension (36) integral with said upright (6).

3. A suspension (1) according to claim 1 or 2, **characterised in that** said upper control arm (8) is formed by a pair of mutually parallel transverse rods (8a,8b), and **in that** said lower control arm (9) is of triangular construction.

4. A suspension (1) according to claim 3, **characterised in that** said transverse rods (8a,8b) can be adjusted in length.

5. A suspension (1) according to claim 3 or 4, **characterised in that** said transverse rods (8a,8b) are are mounted to pass through a side member (5) of said chassis (4) and they are pivotably mounted in the vicinity of a centre line of said side member (5).

6. A suspension (1) according to any one of claims 3 to 5, **characterised by** comprising a longitudinal rod (30) pivotably mounted on said chassis (4) and on said upright (6).

7. A suspension (1) according to any one of the preceding claims for a pair of wheels (2) of a commercial vehicle, **characterised by** comprising a stabiliser bar (44) having an intermediate portion (45) extending transversely to the vehicle and pivotably mounted on said chassis (4), and respective end arms (46) connected via respective links (47) to respective lower control arms (9) linked to said wheels (2).

## Patentansprüche

1. Multiglied-Aufhängung für ein Rad (2) von einem Nutzkraftwagen, der mit einem Chassis (4) mit einem Paar von Längsseitenelementen (5) versehen ist, wobei die Aufhängung (1) einen Ständer (6) umfasst, der geeignet ist einen Achsschenkel des Rads (2) auf eine gelenkige Art zu stützen, einen oberen Lenkerarm (8) und einen unteren Lenkerarm (9), wobei die Arme auf eine gelenkige Art den Ständer (6) mit dem Chassis (4) verbinden, und eine Luftfeder (10), die zwischen dem Chassis (4) und dem Ständer (6) angeordnet ist, **dadurch gekennzeichnet, dass** die Luftfeder (10) im Wesentlichen unterhalb des Längsseitenelements (5) des Chassis (4) angeordnet ist und sich auf ein mit dem Ständer (6) integriertes Stützelement (36) stützt.

2. Aufhängung (1) nach Anspruch 1, **dadurch gekennzeichnet, dass** das Stützelement eine mit dem Ständer (6) integrierte Verlängerung (36) ist.

3. Aufhängung (1) nach Anspruch 1 oder 2, **dadurch gekennzeichnet, dass** der obere Lenkerarm (8) durch ein Paar von gegenseitig parallelen Querstangen (8a, 8b) ausgebildet ist, und dadurch, dass der untere Lenkerarm (9) eine dreieckige Konstruktion aufweist.

4. Aufhängung (1) nach Anspruch 3, **dadurch gekennzeichnet, dass** die Querstangen (8a, 8b) in der Länge angepasst werden können.

5. Aufhängung (1) nach Anspruch 3 oder 4, **dadurch gekennzeichnet, dass** die Querstangen (8a, 8b) so angebracht sind, dass sie durch ein Seitenelement (5) des Chassis (4) durchgehen und sie schwenkbar in der Nähe von einer Mittellinie des Seitenelements (5) angebracht sind.

6. Aufhängung (1) nach einem der Ansprüche 3 bis 5, **dadurch gekennzeichnet, dass** sie eine Längsstange (30) umfasst, die schwenkbar an dem Chassis (4) und an dem Ständer (6) angebracht ist.

7. Aufhängung (1) nach einem der vorhergehenden Ansprüche für ein Paar von Rädern (2) von einem Nutzfahrzeug, **dadurch gekennzeichnet, dass** sie einen Stabilisatorstab (44) mit einem Mittelabschnitt (45) umfasst, der sich transversal zu dem Fahrzeug erstreckt und an dem Chassis (4) schwenkbar angebracht ist, und jeweilige Endarme (46), die über jeweilige Glieder (47) mit den jeweiligen unteren Lenkerarmen (9) verbunden sind, die mit den Rädern (2) verbunden sind.

## Revendications

1. Suspension multi-bras destinée à une roue (2) d'un véhicule à moteur commercial, muni d'un châssis (4) comprenant une paire d'éléments longitudinaux latéraux (5), ladite suspension (1) comprenant un montant (6) adapté pour supporter de façon articulée une fusée de ladite roue (2), un bras de suspension supérieur (8) et un bras de suspension inférieur (9), lesquels bras relient de façon articulée ledit montant (6) audit châssis (4), et un ressort pneumatique (10) interposé entre ledit châssis (4) et ledit montant (6), **caractérisée en ce que** ledit ressort pneumatique (10) est disposé substantiellement au-dessous dudit élément longitudinal latéral (5) dudit châssis (4) et s'appuie sur un élément de support (36) faisant corps avec ledit & montant (6).

2. Suspension (1) selon la revendication 1, **caractérisée en ce que** ledit élément de support est un prolongement (36) faisant corps avec ledit montant (6).

3. Suspension (1) selon la revendication 1 ou 2, **caractérisée en ce que** ledit bras de suspension supérieur (8) est formé par une paire de bielles transversales (8a, 8b) parallèles entre elles, et **en ce que** ledit bras de suspension inférieur (9) est construit en triangle.

4. Suspension (1) selon la revendication 3, **caractérisée en ce que** lesdites bielles transversales (8a, 8b) peuvent être réglées en longueur.

5. Suspension (1) selon la revendication 3 ou 4, **caractérisée en ce que** lesdites bielles transversales (8a, 8b) sont montées de façon à passer à travers un élément latéral (5) dudit châssis (4) et **en ce qu'**elles sont montées de façon pivotante au voisinage de l'axe central dudit élément latéral (5).

6. Suspension (1) selon l'une quelconque des revendications 3 à 5, **caractérisée en ce qu'**elle comprend une bielle longitudinale (30) montée de façon pivotante sur ledit châssis (4) et ledit montant (5).

7. Suspension (1) selon l'une quelconque des revendications précédentes destinée à une paire de roues (2) d'un véhicule commercial, **caractérisée en ce qu'**elle comprend une barre stabilisatrice (44) présentant une partie intermédiaire (45) s'étendant transversalement par rapport au véhicule et montée de façon pivotante sur ledit châssis (4), et des bras terminaux respectifs (46) connectés via des biellettes respectives (47) aux bras de suspension inférieurs respectifs (9) reliés auxdites roues (2).
